# EUROPEAN PATENT SPECIFICATION

(11) **EP 0 774 500 B1**
(45) Date of publication and mention of the grant of the patent: **30.12.1998**
(21) Application number: 96307700.3
(22) Date of filing: 24.10.1996
(51) Int. Cl.: C09D 151/06, C09D 123/28, C08J 7/04

(54) **One-coat, waterborne coating system for untreated polypropylene-based substrates**
Einlagige, wassergetragene Beschichtung für unbehandelte Substrate auf Polypropylen-Basis
Revêtement à base aqueuse monocouche pour les substrats non traités à base de polypropylène

(30) Priority: 15.11.1995 US 6754; 16.05.1996 US 648783
(43) Date of publication of application: 21.05.1997
(73) Proprietor: BEE CHEMICAL COMPANY, Lansing Illinois 60438 (US)
(72) Inventor: Bugajski, James, Crete, Illinois 60417 (US); Moeller, Raymond J., Cedar Lake, Indiana 46303 (US); Kooy, Robert, Lansing, Illinois 60438 (US); Jackson, Michael L., LaGrange, Illinois 60525 (US)
(74) Representative: Bankes, Stephen Charles Digby

(56) References cited:
- WO-A-93/03104
- WO-A-94/28077
- US-A- 4 055 530

## Description

The present invention is directed to a one-coat paint for coating polypropylene and polypropylene-based substrates, especially such substrates used as automotive interior parts.

### Background of the Invention

It is well known that polypropylene substrates and propylene-based substrates, such as glass-filled polypropylene and rubber-filled polypropylene, are difficult to coat; that is, it is difficult to provide a paint or coating with sufficient adherence to polypropylene-based substrates. As a means of adhering coatings to polypropylene, it is known to apply a primer coat to polypropylene-based substrates with a primer based on chlorinated polyolefin, particularly chlorinated polypropylene.

Recently, water-borne chlorinated polyolefin compositions have been developed which are useful as primers for coating polypropylene-based substrates Example of such water-borne chlorinated polyolefin compositions are found in U.S. Patents Nos. 5,427,856 and 5,198,485. Providing a water-borne chlorinated polyolefin composition suitable as a primer is also taught in "Water-Reducible Adhesion Promoters for Coatings on Polypropylene-Based Substrates", Jonathan Lawniczak et al., Eastman Chemical Company, Presented at the Water-Borne, Higher-Solids and Powder Coating Symposium, 26-28 February 1992, New Orleans, LA and in PCT applications WO 93/03085, WO 90/12656, WO 93/01244, and WO 93/03104. Such chlorinated polyolefins may also be imidized, as taught in above-referenced U.S. Patent No. 5,198,485. Chlorinated polyolefins may also be grafted with an unsaturated monomer having carboxylic acid or carboxylic acid anhydride functionality, e.g., maleic anhydride, as taught by S.B. Fry et al., "Development of a New Adhesion Promoter for Coating Thermoplastic Polyolefin", *Automotive Coatings 180* n. 4274, Dec. 12., 1990.

Water-borne chlorinated polyolefin compositions are commercially available, e.g., as sold by Eastman Kodak Co. under trade names Eastman CP310W, Eastman CP347W and Eastman CP349W.

While chlorinated polyolefin compositions, including water-borne polyolefin compositions, have good adhesion to polypropylene-based substrates, such compositions generally have poor physical characteristics. Consequently, chlorinated polyolefin compositions are generally suitable only as primers, and are generally described and provided as such.

To cover a polypropylene-based substrate, therefore, it is necessary to coat the primed polypropylene-based substrate with a further paint or coating, such as an acrylic emulsion-based coating.

In accordance with the invention there is provided a one-coat, non-plasticized coating composition comprising
(A) dispersed particulates of chlorinated polyolefin resin dispersed in an aqueous medium, said resin being unmodified or modified by grafting in an amount of 0.001 to 10 wt.% based on the total weight of polyolefin, of an imide or a monomer containing an acid anhydride group;
(B) separate dispersed particulates of an acrylic resin dispersed in said aqueous medium, said acrylic resin having carboxylic acid functionality such as to provide an acid number between 10 and 250 and a T_{g} of at least 10°C;
said chlorinated polyolefin resin comprising between 35 and 65 wt.% of the total of said polyolefin resin plus said acrylic resin and said acrylic resin comprising between 35 and 65 wt.% of the total of said polyolefin plus said acrylic resin
(C) between 0.01 and 5 phr based on total of A) plus B) of a cross-linking agent reactive with said carboxylic acid functionality of said acrylic resin B) and selected from carbodiimides and oxazoline-functional polymer emulsions; and
(D) between 3 and 25 phr of a volatile organic component for promoting film-forming.

The volatile organic component (VOC) may for example comprise solvents, such as butyl cellosolve and methyl pyrrolidine. The coating composition may be unpigmented or may contain up to 100 phr, preferably between 10 and 80 phr, pigment. The coating composition is applied to a solid, non-porous, non-woven, polypropylene-based substrate, dried and heated to at a temperature of 50°C to 95°C for a time sufficient to promote adherence to the polypropylene-based substrate.

Herein, unless otherwise noted, the resin content is defined as the total resin content including the chlorinated polyolefin resin content of the water-borne chlorinated polyolefin composition A) and the acrylic resin content of the water-borne acrylic resin composition B). Other components, such as the cross-linking agent C), the volatile organic component D), pigments, etc. are defined as parts per hundred resin by weight (phr) based on total resin content.

By polypropylene-based substrate is meant a substrate comprising at least 50% by weight of a resin which is a propylene homopolymer or a copolymer in which at least 60% by weight of the monomer content is propylene.

The chlorinated polyolefins useful in this invention can be broadly described as a chlorinated polyolefin having a molecular weight (weight average) in the range of 9000 to 150,000, a softening point in the range of 75 to 115°C, and an amount of chlorine in the range of 15 to 35 wt percent, based on the weight of the polyolefin. Chlorinated polyolefins useful in this invention are disclosed in U.S. 3,579,485, Chlorinated polyolefins useful in the invention may be unmodified or further modified, e.g., by grafting of an imide or with a monomer containing a carboxylic acid group or carboxylic acid anhydride group, e.g., maleic anhydride. If further modified with an imide, the imide is present at between 0.001 and 10 wt% based on the weight of the polyolefin. If further modified with a monomer containing a carboxylic acid group or carboxylic acid anhydride group, the monomer is present at between 0.001 and 10 wt% based on the weight of the polyolefin.

Preferably, for bonding to a polypropylene-based substrate, the polyolefin which is chlorinated or otherwise modified is a propylene homopolymer or a propylene copolymer in which at least 60 wt% of the monomer content is propylene.

The chlorinated polyolefin resin is dispersed as particles in water in a conventional manner using surfactants and/or amines as described in the above-referenced patents and other above-described references. It is most convenient to use a commercial chlorinated polyolefin dispersion, such as those mentioned above. Typically, water-borne chlorinated polyolefin resin compositions A) are used at solids contents of between 15 and 35 wt%.

The acrylic resins used to form the water-borne acrylic compositions B) are addition products which are addition polymers that are the reaction of acrylic monomers which may be selected from a large number of acrylic and methacrylic acids and esters along with suitable copolymerizable monomers. Examples of acids and esters which can be used include, but are not limited to acrylic acid, methacrylic acid, methyl methacrylate, ethyl acrylate, butyl acrylate, methyl acrylate, ethyl methacrylate, butyl methacrylate, 2-hydroxy ethyl acrylate, 2-hydroxyethylmethacrylate,propyl propyl methacrylate, lauryl methacrylate, 2-hydroxy propyl methacrylate, 2-ethyl hexyl methacrylate, hexyl methacrylate, cyclohexyl methacrylate, ethoxyethyl acrylate, cyclohexyl acrylate, hexyl acrylate, and 2-hydroxy propyl acrylate. Some example of suitable co-polymerizeable monomers include styrene, α-methyl styrene, vinyl toluene, vinyl pyrrolidine, acrylonitrile, butadiene, and isoprene.

The water-borne acrylic emulsions of the present invention may be prepared by conventional means as are known in the art, e.g., by free-radical initiated emulsion polymerization in an aqueous medium or by solution polymerization followed by dispersion in an aqueous medium by neutralization, use of surfactants, use of thickeners or combinations thereof. The acrylic resins of the water-borne acrylic composition B) may be homogeneous, or may be formed by a core and shell technique, as taught in U.S. Patent No. 5,340,870. Other examples of preparation of water-borne acrylic compositions B) (latexes) are found, for example in U.S. Patents Nos. 4,826,631, 3,666,704, 4,179,414, 4,226,752, 4,426,482, 4,539,361, 4,546,160, and 4,668,730. Water-borne acrylic resin compositions are typically used at solids levels of between 30 and 70 wt%.

For forming a permanent coating with physical properties, particularly resistance to cleaning solutions, such as Windex®, alcohol, or isopropyl alcohol required for interior automotive parts, it is necessary that the acrylic resin of the water-borne acrylic composition B) have a glass transition temperature (T_{g}) of at least 10°C, preferably at least 15°C. So as not to form a coating that is too brittle, the T_{g} of the acrylic latex is generally below 150°C and more typically below 80°C. The acrylic resin may have no carboxylic acid functionality. However, preferably the acrylic resin has an acid number of at least 10, more preferably at least 50, up to 250. If present the acid functionality may neutralized with a base, such as ammonia or an amine, to promote dispersibility of the acrylic resin in aqueous medium. Also, carboxylic acid provides a means by which the acrylic resin may be cross-linked by addition of a suitable cross-linking agent C). The cross-linking agents are limited to carbodiimide and oxazoline-functional polymer emulsions, such as sold as Epocros® K-1000 series.

Other functional groups provided by selection of appropriate monomer content may also provide basis for cross-linking the acrylic resin, if desired. For example, -OH functionality, as provided by hydroxy ethyl acrylate or methacrylate, may be cross-linked with water dispersed polyisocyanates, salts of multivalent metal ions and melamine formaldehydes.

A volatile organic component D) is necessary for film-forming, and is provided at at least 3 phr, up to 25 phr. Desirably, from the standpoint of providing a coating composition with low VOC's, the volatile organic component D) is present at no greater than 15 phr. Preferably, the solvent range is 5-15 phr, most preferably 8-12 phr. Component D) evaporates from the coating composition during drying, particularly when the coating composition is baked onto the substrate.

The volatile organic component D) is to be distinguished from plasticizers which remain with the composition as a coating on a substrate. To achieve a one-coat coating with physical properties considered acceptable for interior automotive applications, the composition is substantially non-plasticized. By non-plasticized is meant herein a composition containing no more than 1 phr, and the composition preferably contains no plasticizer which remains with the coating on the substrate.

The water-borne chlorinated polyolefin composition A) and the water-borne acrylic composition B) are conveniently prepared separately. In general practice, in fact, each of latex compositions A) and B) are commercially available and may be purchased as separate water-borne latexes. The composition may be prepared merely by mixing compositions A), B), C) and D). Conventional additives, such as additional surfactants, defoamers, flow control agents, thickeners, UV-stabilizers, and pigments may also be added. Typically, water-borne compositions in accordance with the invention are prepared at solids levels of between 25 and 60%.

The coating composition is coated by conventional means onto a polypropylene-based substrate and allowed to dry. The coating compositions are most useful for coating parts which are solid, non-porous, non-woven monolithic structures. Such structures may be formed in conventional manner, e.g., casting, molding, and extrusion. For good adherence, it is found necessary to bake the coating onto the substrate at at least 50°C. A typical bake cycle is at 82°C for 30 minutes. It is believed that during the bake, a surface interaction takes place between the coating and the substrate, forming a strong adhesive bond. If a cross-linking system is provided, significant curing takes place during the bake cycle.

The invention will now be described in greater detail by way of specific examples.

### Examples 1 and 2

Lapis Blue (Ex. 1) and Saddle (Ex. 2) paints were formulated as follows. (Examples 1 and 2 are expressed as formula weight percent. The weight percentages listed in the table below are expressed as percentages of total composition weight and the weight percentages of water-borne components include water, etc. The solids of the chlorinated polyolefin resin emulsion and the acrylic emulsions are provided in the formulations at equal weight percents.)

| Component | Description | Ex. 1 | Ex. 2 |
|---|---|---|---|
| Eastman CP310W | Chlorinated polyolefin resin emulsion | 29.98 | 28.52 |
| Water | | 3.32 | 3.15 |
| Carboset® XPD-1324 (B.F.Goodrich) | Acrylic emulsion | 14.14 | 13.44 |
| Hycar® 26-172 (B.F.Goodrich) | Acrylic emulsion | 4.72 | 4.79 |
| N-methyl-2-pyrrolindone | | 13.97 | 13.28 |
| Petrolite® 75 | Wax emulsion | 2.97 | 2.82 |
| Mineral Spirits | | 0.30 | 0.28 |
| Barium meta borate | | 0.45 | 0.42 |
| Tinuvin® 1130 (Ciba-Geigy) | UV-absorber | 0.44 | 0.42 |
| Tinuvin® 292 (Ciba-Geigy) | Hindered amine light stabilizer | 0.30 | 0.28 |
| Viscoset® 20 | Alkali-swellable thickener | 1.48 | 1.41 |
| Acrysol® RM-825 (Rohm & Haas) | Associated Thickener | 2.15 | 2.04 |
| Epocros® K-1020E | Acid-reactive cross-linker | 3.94 | 3.75 |
| MPP620VF (T.H. Hilson) | Wax | 0.64 | 0.62 |
| Silcron® G601 (SCM) | Flattener | 3.33 | 1.86 |
| Patco® 519 (American Ingredients) | Silicone defoamer | 0.02 | 0.02 |
| Pigment Mixture | | 17.85 | 23.20 |

All of the above-ingredients were added and mixed under agitation. Each formulation was thinned with water up to 15% to a desired spraying viscosity. The thinned formulations were sprayed via compressed air using a suction-type spray gun onto untreated glass-filled polypropylene (Azdel™) substrates. The painted substrates were flashed at room temperature for 30 minutes and baked for 60 minutes at 90°C. After baking, the painted substrates were removed from the oven and conditioned at room temperature for three days.

### Examples 3 and 4

Medium Graphite (Ex. 3) and Willow (Ex. 4) paints were formulated and prepared substantially as Examples 1 and 2 but with different pigment mixtures. Coating was also as per Example 1.

Coated panels of each of the four colors were tested according to Ford Motor Company published specifications for interior coatings. Results are as follows:

### TEST RESULTS FROM WSB-M62J28-A:

3.8.1 **FILM THICKNESS (FLTM BI 12-1)**
Dry film thickness ranged from 0.8 to 1.2 mils (18 to 30 micrometers).
3.8.2 **ADHESION (FLTM BI 106-1, Method B)** PASS
Rated grade 0 using 3M #898-2 tape for all colors.
3.8.3 **WATER IMMERSION-96 hrs. (FLTM BI 104-01)** PASS
There was no water blistering, dulling or color change for all colors. Also, there was no adhesion loss.
3.8.4 **MAR & SCRATCH RESISTANCE (FLTM BN 108-04)** PASS
The coating did not exhibit wear through after 5000 cycles using scuff head "A" with a 0.9 kg load.
3.8.5 **COLD IMPACT, 90% min. (FLTM BO17-02) PASS**

| | **Lapis Blue** | **Medium Graphite** | **Saddle** | **Willow** |
|---|---|---|---|---|
| **Impact Resistance** | 98% | 110% | 106% | 103% |

3.8.6 **INTERCOAT ADHESION (FLTM BO 17-02)** PASS
Rated grade 0 using 3M #898-2 tape for all colors.
3.8.7 **ABRASION RESISTANCE** PASS **(FLTM BN 108-02, CS#10 wheels, 500 g load)**
There was no exposure of the base substrate after 700 cycles per 25 micrometers. Note: The test was run on smooth plaques.
3.8.8 **RESISTANCE TO WATER & SOAP SPOTTING (FLTM BI 113-01)** PASS
There was no film softening on either spot. There was slight dulling on the soap spot. Discoloration was 5 on the AATCC scale for all colors.
3.8.9 **CLEANING SOLUTION RESISTANCE, 10 cycles** PASS There was no more color transfer than rating 3 on the AATCC color transference scale:

| **AATCC** | **Lapis** | **Medium Graphite** | **Saddle** | **Willow** |
|---|---|---|---|---|
| **Glass Cleaner (E4A2-19C507-AA)** | 4 | 4 | 4 | 4 |
| **All Purpose (EOAZ-19526-AA)** | 4 | 4 | 4 | 5 |
| **50% IPA** | 4 | 4 | 4 | 4 |

- 3.8.10: **FOGGING RESISTANCE, 60% min (FLTM BO 116-03)** PASS

There was no formation of excessive amounts of clear film or droplets.

| | **Lapis Blue** | **Medium Graphite** | **Saddle** | **Willow** |
|---|---|---|---|---|
| **FOG NUMBER** | 97% | 90% | 89% | 90% |

- 3.8.11: **HEAT AGING** PASS

There was no evidence of tackiness, staining, or color change in excess of 3 on the AATCC scale for all colors.
3.8.12.2 **ACCELERATED WEATHERING** PASS
Delta E = 1.7 +/- 0.2 maximum.
Gloss Change = 30% maximum.

| | **Lapis Blue** | **Medium Graphite** | **Saddle** | **Willow** |
|---|---|---|---|---|
| **Delta E:** **400 h Carbon WOM** **(FLTM BO 1-1)** | 1.01 | 0.22 | 0.56 | 0.27 |
| **488.8 kJ Xenon** **(SAE J1885)** | 0.85 | 0.66 | 0.63 | 0.70 |
| **Delta Gloss:** **400 h Carbon WOM** | 28% | 29% | 27% | 28% |
| **488.8 kJ Xenon** | 26% | 29% | 28% | 28% |
| **From** | 1.9 | 3.1 | 2.8 | 3.2 |
| **To** | 1.4 | 2.2 | 2.0 | 2.3 |

After the above listed weathering tests, each panel was tested to 24 hours water immersion. All passed with no blistering, dulling or loss of adhesion.

### Test Results From WSK-M2P161-A2 Not Covered Tn WSB-M62J28-A:

3.6 **ENVIRONMENTAL CYCLING (FLTM BQ 104-07, Procedure 5)** PASS
There was no evidence of cracks, no blistering, no change in appearance or other failure for all colors. There was no adhesion loss.
3.7 **HEAT RESISTANCE (7 d at 80 +/-2°C)** PASS
There was no color change, blistering or loss of adhesion for all colors.
3.12 **CROCKING TEST (FLTM BN 107-01)** PASS

| **AATCC** | **Lapis Blue** | **Medium Graphite** | **Saddle** | **Willow** |
|---|---|---|---|---|
| **Wet** | 5 | 5 | 5 | 5 |
| **Dry** | 4 | 5 | 5 | 4 |

## Claims

1. A one-coat, non-plasticized coating composition comprising
A) dispersed particulates of chlorinated polyolefin resin dispersed in an aqueous medium, said resin being unmodified or modified by grafting in an amount of 0.001 to 10 wt.% based on the total weight of polyolefin, of an imide or a monomer containing an acid anhydride group;
B) separate dispersed particulates of an acrylic resin dispersed in said aqueous medium, said acrylic resin having carboxylic acid functionality such as to provide an acid number between 10 and 250 and a T_{g} of at least 10°C;
said chlorinated polyolefin resin comprising between 35 and 65 wt.% of the total of said polyolefin resin plus said acrylic resin and said acrylic resin comprising between 35 and 65 wt.% of the total of said polyolefin plus said acrylic resin
C) between 0.01 and 5 phr based on total of A) plus B) of a cross-linking agent reactive with said carboxylic acid functionality of said acrylic resin B) and selected from carbodiimides and oxazoline-functional polymer emulsions; and
D) between 3 and 25 phr of a volatile organic component for promoting film-forming.

2. A coating composition in accordance with claim 1 further comprising between 20 and 100 phr pigment.

3. A coating composition in accordance with claim 1 or claim 2 wherein said cross-linking agent is a carbodiimide.

4. A coating composition in accordance with claim 1 or claim 2 wherein said cross-linking agent is an oxazoline functional polymer emulsion.

5. A coating composition in accordance with any preceding claim wherein said chlorinated polyolefin is chlorinated polypropylene.

6. A method of providing a coating to a solid, nonporous, non-woven polypropylene-based substrate comprising
1) applying a coating composition according to any preceding claim to said polypropylene substrate,
2) drying said coating composition on said substrate, and
3) baking said coating composition on said substrate at a temperature of at between 50°C and 95°C for a time sufficient to adhere said coating composition to said substrate.

## Patentansprüche

1. Einlagige, nicht weichgemachte Beschichtungszusammensetzung mit
A. dispergierten Partikeln von in einem wäßrigen Medium dispergiertem chloriertem Polyolefinharz, wobei dieses Harz unmodifiziert oder durch Pfropfen in einer Menge von 0,001 bis 10 Gew.%, bezogen auf das Polyolefingesamtgewicht, eines Imids oder eines eine Säureanhydridgruppe enthaltenden Monomers modifiziert ist,
B. getrennten dispergierten Partikeln eines in dem wäßrigen Medium dispergierten Acrylharzes, wobei dieses Acrylharz eine solche Carbonsäurefunktionalität, daß es eine Säurezahl zwische 10 und 250 ergibt, und ein T_{g} von wenigstens 10 °C besitzt,
wobei dieses chlorierte Polyolefinharz zwischen 35 und 65 Gew. % der Gesamtheit des Polyolefinharzes plus des Acrylharzes umfaßt und das Acrylharz zwischen 35 und 65 Gew.% der Gesamtheit des Polyolefins plus des Acrylharzes umfaßt,
C. zwischen 0,01 und 5 phr, bezogen auf die Gesamtheit von A + B, eines Vernetzungsmittels, das mit der Carbonsäurefunktionalität des Acrylharzes B reagieren kann und unter Carbodiimiden und oxazolinfunkionellen Polymeremulsionen ausgewählt ist, und
D. zwischen 3 und 25 phr einer flüchtigen organischen Komponente zur Förderung der Filmbildung.

2. Beschichtungszusammensetzung nach Anspruch 1 weiterhin mit 20 bis 100 phr Pigment.

3. Beschichtungszusammensetzung nach Anspruch 1 oder 2, worin das Vernetzungsmittel ein Carbodiimid ist.

4. Beschichtungszusammensetzung nach Anspruch 1 oder 2, worin das Vernetzungsmittel eine oxazolinfunktionelle Polymeremulsion ist.

5. Beschichtungszusammensetzung nach einem der vorausgehenden Ansprüche, bei der das chlorierte Polyolefin chloriertes Polypropylen ist.

6. Verfahren zur Herstellung einer Beschichtung auf einem festen, nichtporösen, nichtgewebten Substrat auf Polypropylenbasis, bei dem man
1. eine Beschichtungszusammensetzung nach einem der vorausgehenden Ansprüche auf dem Polypropylensubstrat aufbringt,
2. die Beschichtungszusammensetzung auf dem Substrat trocknet und
3. die Beschichtungszusammensetzung auf dem Substrat bei einer Temperatur zwischen 50 und 95 °C ausreichend lange, damit die Beschichtungszusammensetzung auf dem Substrat haftet, einbrennt.

## Revendications

1. Composition de revêtement non plastifiée en une seule couche comprenant
A) des particules dispersées de résine polyoléfinique chlorée dispersées dans un véhicule aqueux, ladite résine étant non modifiée ou modifiée par greffage, à raison de 0,001 à 10% en poids sur la base du poids total de polyoléfine, d'un imide ou d'un monomère contenant un groupe anhydride acide;
B) des particules dispersées séparées d'une résine acrylique dispersées dans ledit véhicule aqueux, ladite résine acrylique ayant une fonctionnalité acide carboxylique propre à produire un indice d'acidité compris entre 10 et 250 et une température de transition vitreuse T_{g} d'au moins 10°C;
ladite résine polyoléfinique chlorée comprenant entre 35 et 65% en poids du total de ladite résine polyoléfinique et de ladite résine acrylique, et ladite résine acrylique comprenant entre 35 et 65% en poids du total de ladite résine polyoléfinique et de ladite résine acrylique
C) entre 0,01 et 5 phr basé sur le total de A) plus B) d'un agent de réticulation réagissant avec ladite fonctionnalité acide carboxylique de ladite résine acrylique B) et sélectionné entre des carbodiimides et des émulsions polymères à fonction oxazoline; et
D) entre 3 et 25 phr d'un composant organique volatile pour favoriser la formation d'une pellicule.

2. Composition de revêtement selon la revendication 1, comprenant en outre entre 20 et 100 phr de pigment.

3. Composition de revêtement selon la revendication 1 ou la revendication 2, dans laquelle ledit agent de réticulation est une carbodiimide.

4. Composition de revêtement selon la revendication 1 ou la revendication 2, dans laquelle ledit agent de réticulation est une émulsion polymère à fonction oxazoline.

5. Composition de revêtement selon l'une quelconque des revendications précédentes dans laquelle ladite polyoléfine chlorée est du polypropylène chloré.

6. Procédé de mise en oeuvre d'un revêtement sur un substrat solide, non poreux, à base de polypropylène non tissé, comprenant
1) l'application d'une composition de revêtement selon l'une quelconque des revendications précédentes sur ledit substrat de polypropylène,
2) le séchage de ladite composition de revêtement sur ledit substrat, et
3) l'étuvage de ladite composition de revêtement sur ledit substrat à une température comprise entre 50°C et 95°C pendant une durée suffisante pour permettre l'adhérence de ladite composition de revêtement audit substrat.
